# EUROPEAN PATENT SPECIFICATION

(11) **EP 2 027 957 B1**
(45) Date of publication and mention of the grant of the patent: **07.03.2012**
(21) Application number: 06752927.1
(22) Date of filing: 09.06.2006
(51) Int. Cl.: B23B 51/00, B23B 51/02

(54) **A STRONG HIGH PERFORMANCE TWIST DRILL**
STARKER HOCHLEISTUNGSSPIRALBOHRER
FORET HÉLICOÏDAL RÉSISTANT À HAUTES PERFORMANCES

(43) Date of publication of application: 25.02.2009
(73) Proprietor: Jiangsu Tiangong Tools Co., Ltd., HouxiangTown Danyang City, Jiangsu 212-300 (CN)
(72) Inventor: ZHU, Xiaokun, Danyang City, Jiangsu 212-300 (CN)
(74) Representative: Allgayer, Ulla Barbara
(86) International application number: PCT/CN2006/001276
(87) International publication number: WO 2007/143883

(56) References cited:
- WO-A1-00/03825
- CN-Y- 2 192 422
- CN-Y- 2 499 154
- CN-Y- 2 663 065
- DE-A1- 19 807 609
- DE-A1- 19 807 609
- JP-A- 11 267 912
- JP-A- 2005 205 526
- Bruins, Dräger: "Werkzeuge und Werkzeugmaschinen für die spanende Metallberarbeitung", 1 January 1984 (1984-01-01), Carl Hanser Verlag, München, DE, XP002605683, ISBN: 3-446-13787-4 vol. 1, pages 120-121, * page 120, paragraph 1 - page 121, paragraph 2; figure 181 *
- COLVIN, STANLEY: "DRILLING AND SURFACE PRACTICE", 1 January 1943 (1943-01-01), MC GRAW HILL, NEW YORK, XP002605684, pages 8-9, * page 8, paragraph 4 - page 9, paragraph 1; figures 4, 5 *
- SPÜR, STÖFERLE: "HANDBUCH DER FERTIGUNGSTECHNIK", 1 January 1979 (1979-01-01), CARL HANSER VERLAG, MÜNCHEN, XP002605685, ISBN: 3-446-12534-5 vol. 3, page 357, * page 357; figures 5, 6 *

## Description

### Technical field

This application relates to a type of hole processing tool, in particular a type of twist drill according to the preamble of claim 1.

### Background of invention

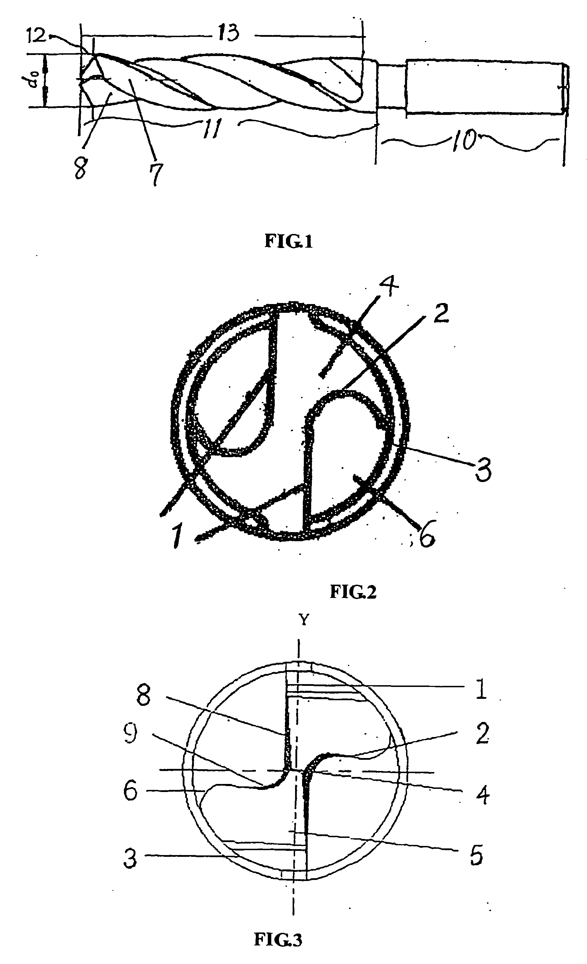

As shown in Fig. 1, the twist drill is the most widely used hole processing tool. Normally, diameter range is 0.25∼80mm. A twist drill mainly consists of a working part and a shank. The working part includes two spiral grooves. Helix angle of twist drill mainly affects rake angle on cutting edge, strength of edge clack, and chip removal performance, and is normally 25°∼32°. Spiral grooves can be processed by milling, grinding, hot rolling, or hot extrusion etc. After tool grinding, front end of drill becomes cutting part. Vertex angle of cutting part of standard twist drill is 118°. Chisel edge angle is 40°∼60°. Angle of relief is 8°∼20°. Due to structural causes, rake angle is large at outer part and gradually decrease toward middle part. At chisel edge, rake angle is negative (can reach about -55°). During drilling, chisel edge functions as extrusion effect.

During drilling, a twist drill has two main cutting edges and one chisel edge that cut (Fig.2), often referred to as "one bit (drill core bit) and three edges". Twist drill operates in semi-enclosed status with chisel edge seriously squeezed and chip removal not free. Therefore, processing conditions are more complicated and difficult than those of turning arid other cutting methods. In addition, processing precision is relatively low and surface processed is relatively rough. Quality and efficiency of drilling largely depend on shape of drill cutting edge. During production, the method of grinding is often used to change shape and angel of twist drill cutting edge to reduce cutting resistance and improve drilling performance. Twist drill shank can be straight or conical. During processing, the former will be clamped in drill chuck, while the latter will be inserted in the conical hole in lathe main shaft or tailstock.

Other drills are known from:
Bruins, Dräger: "Werkzeuge und Werkzeugmaschinen für die spanende Metallbearbeitung", 1 January 1984 (1984-01-01), Carl Hanser Verlag, München, DE, XP002605683 which discloses the features of the preamble;
COLVIN, STANLEY: "DRILLING AND SURFACE PRACTICE", 1 January 1943 (1943-01-01), MC GRAW HILL, NEW YORK, XP002605684;
SPÜR, STÖFERLE: "HANDBUCH DER FERTIGUNGSTECHNIK", 1 January 1979 (1979-01-01), CARL HANSER VERLAG, MÜNCHEN, XP002605685;
DE 198 07 609 A1 (WERKZEUGFABRIK GMBH KOENIGSEE [DE] WERKZEUGFABRIK KOENIGSEE ZWEIG [DE]) 24 June 1999 (1999-06-24); and
WO 00/03825 A1 (COLVIN KEVIN F [US]) 27 January 2000 (2000-01-27).

Traditional normal twist drill has the following main problems:
1. Value or rake angle on each point of main cutting edge varies greatly and becomes negative where approaching drill core; hence cutting conditions are poor.
2. Chisel edge is too long and cutting edge angle is very large. With very negative rake angle, cutting conditions are even poorer. Therefore, axial resistance is large and centering is poor.
3. Main cutting edge is long and cutting is wide, so that chips coil to wide spiral roll, occupying large space and making chip removal not free (it is difficult for cutting liquid to flow in).

To improve performance of traditional twist drills, many methods have been adopted. Chip dividing groove or grinding of outer edge and chisel edge has been adopted, greatly improving twist drill performance. However, variation of rake angle on each point of main cutting edge is still large, and negative rake angle still exists near drill core. Poor cutting conditions have not been essentially changed.

### Summary of the invention

To effectively solve these problems, this application provides a type of strong high performance twist drill, so that change of rake angle on main cutting edge is small and rake angle values are increased. In particular, value of rake angle near drill core is increased, improving cutting conditions.

To achieve above purposes, this application adopts the following technical scheme: A type of strong high performance twist drill, comprising a shank and a working part. Said working part comprises a cutting part and a guiding part. Said cutting part includes a rake face, a relief face, main cutting edge, and chisel edge. Said guiding part includes rear groove edge and flute. Wherein said main cutting edge tilts towards drill core from outside to inside. In the cross section, angle between main cutting edge and center vertical line is 3-25°. Main cutting edge intersects with back groove face at narrow chisel edge. Length of narrow chisel edge is 0.03-0.5mm. Rake angle at drill core is positive.

Length of aforesaid chisel edge shall be determined according to product size, and is normally 0.03mm-0.5mm.

In this application, through grinding of rake face and main cutting edge of traditional normal twist drill, main cutting edge tilts towards drill core so that chisel edge is shortened. At the same time, change of rake angle on main cutting edge is smaller and rake angle at drill core is positive. Above improvement reduces drilling resistance so that axial force of this utility model is lower than that of normal twist drill by about 30% and its torque lower than that of normal twist drill by about 15%. Above processing is symmetric processing.

Furthermore, a crescent shaped arc groove is provided on relief face near dill core. On left and right straight edges of the main cutting edge, outer edge, concave edge and inner edge are provided from outside to inside. Included angle of outer edge generating line is larger than that of inner edge generating line by 5-20°. Radius of concave edge shall be determined according to diameter of twist drill, and is normally set to 0.2-0.8mm. Angle of relief is 12°-18°.

This is to grind relief face to generate two symmetric crescent shaped arc grooves, and form the shape of 3 apices and 7 edges (" 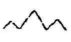 "), thus reducing drilling heat, temperature of cutting edge, and wear of cutting edge, improving durability of drill, and increasing production efficiency by 3-5 times.

As an improvement of this application, transition edge at intersection between main cutting edge rear groove edge and small outer arc face adopts round angle.

Above improvement is to grind rear groove edge to remove closed angle and form round angle, so that chips are evenly distributed along main cutting edge, have small deform, are basically in the form of strips, and can be discharged easily along flutes.

As further improvement of this utility model, groove shaped angle formed by main cutting edge and back groove face is an open V in the section perpendicular to drill edge helix.

Above improvement is to grind back groove edge to increase groove shaped angle and drill core thickness, thereby increasing drill strength against twisting.

### Description of drawings

Fig. 1 is structural schematic of traditional twist drill.
Fig. 2 is structural schematic of apex of traditional twist drill.
Fig.3 is front view of cutting part of preferred embodiments 1-3 of this application
Fig.4 is structural schematic of main cutting edge and rake face of this application 1-3.
Fig. 5 is structural schematic of main cutting edge and relief face of this application 4-6.
Fig.6 is axial structural schematic of this application 1-3.
Fig. 7 is A-A section view of Fig. 6.

In above figures,
1: Main cutting edge; 2: Rear groove edge; 3: Small outer arc face; 4: Chisel edge; 5: Relief face; 6: Back groove edge; 7: Chip dividing groove; 8: Rake face; 9: Back groove face; 10: Shank; 11: Working part; 12: Cutting part; 13: Guiding part; 16: Crescent shaped arc groove; 17: Outer edge; 18: Concave edge; 19: Inner edge.

### Embodiments

The following further describes this application in combination with the figures.

### Embodiment 1 (not showing all claimed features):

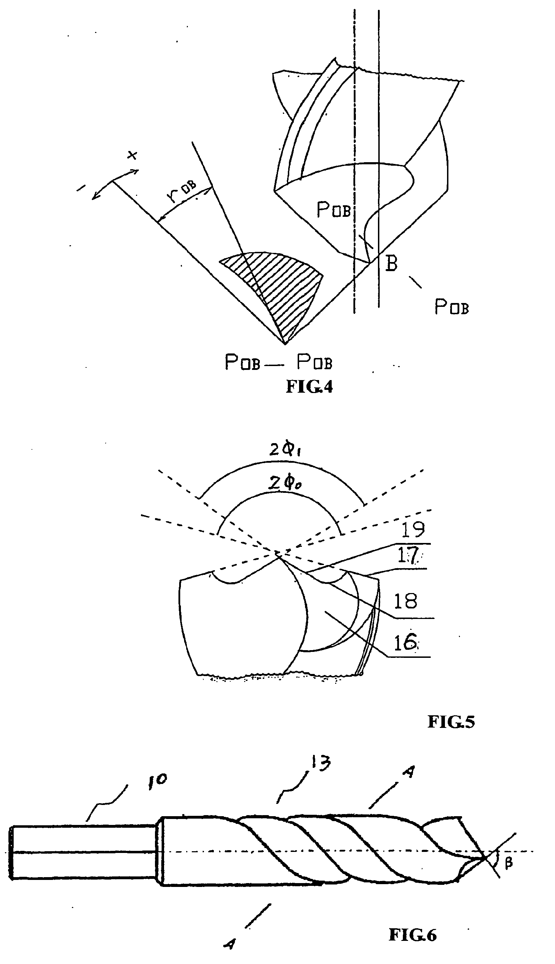

As shown in Fig.3 and Fig.4, a strong high performance twist drill of diameter of 0.25mm, comprising shank 10 and working part 11. Said working part comprising cutting part 12 and guiding part 13. Said cutting part 12 consists of rake face 8, relief face 5, main cutting edge 1 and chisel edge 4. Said guiding part 13 consists of rear groove edge 2 and chip dividing groove 7. Main cutting edge tilts towards drill core from outside to inside. In cross section, included angle between main cutting edge 1 and center vertical line Y is 3°. Main cutting edge 1 and rear groove edge 2 intersects at narrow chisel edge 4. Length of narrow chisel edge is 0.03mm. Rake angle at drill core is positive.

As shown in Fig.3, transition edge at intersection between rear groove edge 2 and small outer arc face 3 is round angle.

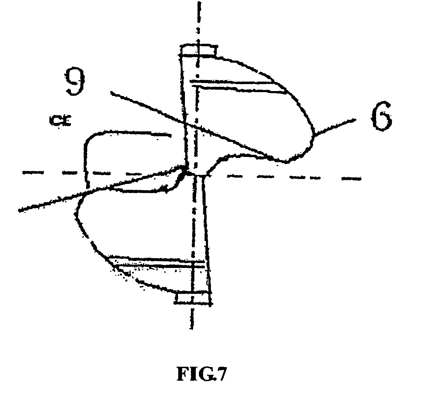

As shown in Fig.6 and Fig. 7, groove shaped angle formed by main cutting edge I and back groove face 9 is an open V on cross section perpendicular to drill edge helix. The angle of helix of drill edge helix is 25°. Vertex angle β is 110°. Groove shaped angle α in this cross section will be 100°.

As shown in Fig.6, shank 10 includes 3 planes at 60° with one another. Cross section formed by these 3 planes is an equilateral triangle, the center of which coincides with drill axis line. Therefore, clamping of drill is easy, firm, and not easily loosened, and cutting efficiency has been further improved.

### Embodiment 2 (not showing all claimed features):

As shown in Fig.3 and Fig. 4, a strong high performance twist drill of diameter of 30mm, comprising shank 10 and working part 11. Said working part comprising cutting part 12 and guiding part 13. Said cutting part 12 consists of rake face 8, relief face 5, main cutting edge 1, and chisel edge 4. Said guiding part 13 consists of rear groove edge 2 and chip dividing groove 7. Main cutting edge tilts towards drill core from outside to inside. In cross section, included angle between main cutting edge I and center vertical line Y is 15°. Main cutting edge 1 and rear groove edge 2 intersects at narrow chisel edge 4. Length of narrow chisel edge is 0.25mm. Rake angle at drill core is positive.

As shown in Fig.3, transition edge at intersection between rear groove edge 2 and small outer arc face 3 is round angle.

As shown in Fig.6 and Fig.7, groove shaped angle formed by main cutting edge 1 and back groove face 9 is an open V on cross section perpendicular to drill edge helix. The angle of helix of drill edge helix is 30°. Vertex angle β is 120°. Groove shaped angle α in this cross section will be 125°.

As shown in Fig.6, shank 10 includes 3 planes at 60° with one another. Cross section formed by these 3 planes is an equilateral triangle, the center of which coincides with drill axis line. Therefore, clamping of drill is easy, firm, and not easily loosened, and cutting efficiency has been further improved.

### Embodiment 3 (not showing all claimed features):

As shown in Fig.3 and Fig.4, a strong high performance twist drill of diameter of 80mm, comprising shank 10 and working part 11. Said working part comprising cutting part 12 and guiding part 13. Said cutting part 12 consists of rake face 8, relief face 5, main cutting edge 1, and chisel edge 4. Said guiding part 13 consists of rear groove edge 2 and chip dividing groove 7. Main cutting edge tilts towards drill core from outside to inside. In cross section, included angle between main cutting edge I and center vertical line Y is 25°. Main cutting edge I and rear groove edge 2 intersects at narrow chisel edge 4. Length of narrow chisel edge is 0.5mm. Rake angle at drill core is positive.

As shown in Fig.3, transition edge at intersection between rear groove edge 2 and small outer arc face 3 is round angle.

As shown in Fig.6 and Fig.7, groove shaped angle formed by main cutting edge 1 and back groove face 9 is an open V on cross section perpendicular to drill edge helix. The angle of helix of drill edge helix is 35°. Vertex angles is 140°. Groove shaped angle α in this cross section will be 150°.

As shown in Fig.6, shank 10 includes 3 planes at 60° with one another. Cross section formed by these 3 planes is an equilateral triangle, the center of which coincides with drill axis line. Therefore, clamping of drill is easy, firm, and not easily loosened, and cutting efficiency has been further improved.

### Preferred embodiment 4

This preferred embodiment is basically the same as embodiment 1. Differences lie in: As shown in Fig.5, on relief face 5 near drill core, crescent shaped arc groove 16 is provided, and on left and right straight edge of main cutting edge, outer edge 17, concave edge 18 and inner edge 19 are provided from outside to inside. Outer edge generating line included angle 2Φ₀ is larger than inner edge generating line included angle 2Φ₁ by 5°, that is to say, 2Φ₀ is 110°<2Φ₀≤140° (e.g.: 112°, 118°, 125°, 135°, 140°) and 2Φ₁ is 107°<2Φ₀≤135°(e.g. 107°, 113°, 120°, 130°, 135°). Concave edge 18 has a radius of 0.2mm and angle of relief of 12°.

### Preferred embodiment 5

This preferred embodiment is basically the same as embodiment 2. Differences lie in: As shown in Fig.5, on relief face 5 near drill core, crescent shaped arc groove 16 is provided, and on left and right straight edge of main cutting edge, outer edge 17, concave edge 18 and inner edge 19 are provided from outside to inside. Outer edge generating line included angle 2Φ₀ is larger than inner edge generating line included angle 2Φ₁ by 15°, that is to say, 2Φ₀ is 110°<2Φ₀≤140° (e.g.: 112°, 118°, 125°, 135°, 140°) and 2Φ₁ is 95°<2Φ₀≤125° (e.g. 97°, 103°, 110°, 120°, 125°). Concave edge 18 has a radius of 0.5mm and angle of relief of 16°.

### Preferred embodiment 6

This preferred embodiment is basically the same as embodiment 3. Differences lie in: As shown in Fig.5, on relief face 5 near drill core, crescent shaped arc groove 16 is provided, and on left and right straight edge of main cutting edge, outer edge 17, concave edge 18 and inner edge 19 are provided from outside to inside. Outer edge generating line included angle 2Φ₀ is larger than inner edge generating line included angle 2Φ₁ by 20°, that is to say, 2Φ₀ is 110°<2Φ₀ <140° (e.g.: 112°, 118°, 125°, 135°, 140°) and 2Φ₁ is 90°<2Φ₀<120° (e.g. 92°, 98°,105°,115°,120°). Concave edge 18 has a radius of 0.8mm and angle of relief of 18°.

## Claims

1. A strong high performance twist drill comprising:
a shank and a working part;
said working part comprising a cutting part and a guiding part;
said cutting part consisting of a rake face (8), a relief face (5), a main cutting edge (1) and a chisel edge (4), and said guiding part consisting of rear groove edges (2) and flutes;
wherein said main cutting edge (1) intersects with a back groove face (9) at said narrow chisel edge (4); said main cutting edge (1) tilts towards drill core from outside to inside, **characterized in that** the angle between said main cutting edge and the center vertical line at the cross section is in the range of 3-25°;
the length of said narrow chisel edge (4) is in the range of 0.03-0.5 mm;
the rake angle at the drill core is positive;
a crescent shaped arc groove (16) is provided on said relief face (5) near the drill core;
an outer edge (17), a concave edge (18) and an inner edge (19) are provided on left and
right straight edge of said main cutting edge (1) from outside to inside, and
an outer edge (17) generating line included angle (Φ₀) is larger than an inner edge (19) generating line included angle (Φ₁) by 5-20°.

2. The twist drill of claim 1 wherein transition edge at intersection between said main cutting edge (1) rear groove edge (2) and nearby small outer arc face (3) is a round angle.

3. The twist drill of claim 1 wherein groove shaped angle formed by said main cutting edge (1) and back groove face (9) is an open V on cross section perpendicular to drill edge helix.

4. The twist drill of claim 1 wherein said shank (10) is provided with 3 planes.

5. The twist drill of claim 1 wherein included angle of said outer edge (17) generating line is 110°<2Φ₀<140°, radius of said concave edge (18) is 0.2-0.8mm, and angle of relief of said concave edge (18) is 12°-18°.

6. The twist drill of claim 3 wherein said groove shaped angle on said cross section α is 100°-150°.

7. The twist drill of claim 4 wherein the 3 planes on said shank (10) is at 60° with one another, and cross section formed by these planes is an equilateral triangle, the center of which coincides with drill axis line.

## Patentansprüche

1. Starker Hochleistungsspiralbohrer mit
einem Schaft und einem Arbeitsabschnitt,
bei dem
der Arbeitsabschnitt einen Schneideabschnitt und einen Führungsabschnitt aufweist,
der Schneideabschnitt aus einer Spanfläche (8), einer Freifläche (5), einer Hauptschneide (1) und einer Querschneide (4) aufgebaut ist und der Führungsabschnitt aus rückwärtigen Nutkanten (2) und Span-Nuten aufgebaut ist,
die Hauptschneide (1) sich mit einer hinteren Nutfläche (9) an der schmalen Querschneide (4) schneidet, die Hauptschneide (1) sich in Richtung des Bohrerkerns von außen nach innen neigt, **dadurch gekennzeichnet, dass**
der Winkel zwischen der Hauptschneide und der vertikalen Mittellinie im Querschnitt im Bereich von 3-25° liegt,
die Länge der Querschneide (4) im Bereich zwischen 0,03 bis 0,5 mm liegt,
der Spanwinkel im Bohrerkern positiv ist,
eine sichelförmige Bogennut (16) auf der Freifläche (5) nahe dem Bohrerkern vorgesehen ist, eine äußere Kante (17), eine konkave Kante (18) und eine innere Kante (19) auf einer linken und rechten geraden Kante der Hauptschneide (1) von außen nach innen vorgesehen sind, und ein Winkel (Φ₀), der durch Linien eingeschlossen ist, die durch die äußeren Kanten (17) definiert sind, um 5-20° größer ist, als ein Winkel (Φ₁), der durch Linien eingeschlossen ist, die durch die inneren Kanten (19) definiert sind.

2. Spiralbohrer nach Anspruch 1, bei dem eine Übergangskante an einer Schnittstelle zwischen der rückwärtigen Nutkante (2) der Hauptschneide (1) und einer nahe gelegenen äußeren Bogenfläche (3) ein abgerundeter Winkel ist.

3. Spiralbohrer nach Anspruch 1, bei dem ein nutförmiger Winkel, der durch die Hauptschneide (1) und die hintere Nutfläche (9) gebildet ist, ein offenes V gesehen im Querschnitt senkrecht zu der Bohrerkantenhelix ist.

4. Spiralbohrer nach Anspruch 1, bei dem der Schaft (10) 3 Ebenen aufweist.

5. Spiralbohrer nach Anspruch 1, bei dem der Winkel, der durch Linien eingeschlossen ist, die durch die äußeren Kanten (17) definiert sind, 110°<2Φ₀<140° ist, ein Radius der konkaven Kante (18) 0,2-0,8 mm ist und ein Freiwinkel der konkaven Kante (18) 12°-18° ist.

6. Spiralbohrer nach Anspruch 3, bei dem der nutförmige Winkel α gesehen im Querschnitt 100°-150° ist.

7. Spiralbohrer nach Anspruch 4, bei dem die 3 Ebenen des Schafts (10) 60° zueinander liegen und ein Querschnitt, der durch diese Ebenen ausgebildet ist, ein gleichseitiges Dreieck ist, dessen Zentrum mit der Bohrerachsenlinie übereinstimmt.

## Revendications

1. Foret hélicoïdal résistant, de hautes
performances, comprenant :
une queue et une partie de travail ;
ladite partie de travail comprenant une partie de coupe et une partie de guidage ;
ladite partie de coupe étant constituée d'une face de dépouille (8), d'une face de relief (5), d'un tranchant principal (1)
et d'une arête transversale (4), et ladite partie de guidage étant constituée de bords de rainures arrière (2) et de cannelures ;
dans lequel ledit tranchant principal (1) coupe une face de rainure arrière (9) sur ladite arête transversale étroite (4), ledit tranchant principal (1) s'incline vers le noyau du foret de l'extérieur vers l'intérieur, **caractérisé en ce que** l'angle entre ledit tranchant principal et l'axe vertical dans la coupe transversale se situe dans la plage de 3 à 25 ° ;
la longueur de ladite arête transversale étroite (4) se situe dans la plage de 0,03 à 0,5 mm ;
l'angle de dépouille sur le noyau du foret est positif ;
une rainure (16) arquée en forme de croissant est ménagée sur ladite face de relief (5) proche du noyau du foret ; un bord externe (17), un bord concave (18) et un bord interne (19) sont aménagés sur les bords droits gauche et droite dudit tranchant principal (1) de l'extérieur vers l'intérieur, et un angle inclus (Φ₀) de la ligne génératrice du bord externe (17) est supérieur à un angle inclus (Φ₁) de la ligne génératrice du bord interne (19) de 5 à 20 °.

2. Foret hélicoïdal selon la revendication 1, dans lequel le bord de transition à l'intersection entre le bord de rainure arrière (2) dudit tranchant principal (1) et la petite face d'arc externe proche (3) est un angle arrondi.

3. Foret hélicoïdal selon la revendication 1, dans lequel l'angle en forme de rainure formé par ledit tranchant principal (1) et la face de rainure arrière (9) est un V ouvert en coupe transversale perpendiculaire à l'hélice du tranchant de foret.

4. Foret hélicoïdal selon la revendication 1, dans lequel ladite queue (10) présente 3 plans.

5. Foret hélicoïdal selon la revendication 1, dans lequel l'angle inclus de ladite ligne génératrice du bord externe (17) est de 110 °<2Φ₀<140 °, le rayon dudit bord concave (18) est de 0,2 à 0,8 mm et l'angle de relief dudit bord concave (18) est de 12 ° à 18 °.

6. Foret hélicoïdal selon la revendication 3, dans lequel ledit angle en forme de rainure dans ladite coupe transversale est de 100 ° à 150 °.

7. Foret hélicoïdal selon la revendication 4, dans lequel les 3 plans sur ladite queue (10) sont à 60 ° l'un de l'autre, et la coupe transversale formée par ces plans est un triangle équilatéral, dont le centre coïncide avec l'axe du foret.
